# EUROPEAN PATENT SPECIFICATION

(11) **EP 1 363 854 B1**
(45) Date of publication and mention of the grant of the patent: **22.04.2009**
(21) Application number: 02712603.6
(22) Date of filing: 14.02.2002
(51) Int. Cl.: C01B 39/02, A23K 1/175, B01J 20/16

(54) **TRIBOCHEMICAL PROCESS FOR OBTAINING ORGANOZEOLITE ADSORBENT OF MYCOTOXINS**
VERFAHREN ZUR TRIBOCHEMISCHEN GEWINNUNG EINES ORGANOZEOLITHEN ALS ADSORBENS FÜR MYCOTOXINE,
PROCEDURE TRIBOCHIMIQUE D'OBTENTION D'UN ORGANOZEOLITE ADSORBANT LES MYCOTOXINES

(30) Priority: 15.02.2001 YU 12901
(43) Date of publication of application: 26.11.2003
(73) Proprietor: PATENT CO., preduzece za proizvodnju, usluge i promet d.o.o. Misicevo, Misicevo b.b. (RS)
(72) Inventor: Tomasevic-Canovic, Magdalena, 11000 Beograd (YU); Milosevic, Sinisa, 11000 (YU)
(74) Representative: Boskovic, Davor
(86) International application number: PCT/YU2002/000003
(87) International publication number: WO 2002/064502

(56) References cited:
- WO-A-00/41806
- WO-A-99/53772
- WO-A-99/57994
- AT-B- 397 756
- DD-A- 275 390
- US-A- 2 966 506
- US-A- 5 314 852
- RAMOS A J ET AL: "Prevention of aflatoxicosis in farm animals by means of hydrated sodium calcium aluminosilicate addition to feedstuffs: a review" ANIMAL FEED SCIENCE AND TECHNOLOGY, AMSTERDAM, NL, vol. 65, no. 1/4, 1997, pages 197-206, XP002117554

## Description

### Field of the invention

The invention generally belongs to animal feed additive of mineral component group, used for adsorption of mycotoxins and it is related to the new trybochemical process of obtaining organozeolite, the agent for mycotoxins adsorption as well as the application of this process which takes place in solid phase, whereas high intensity mechanical forces are applied in developing a chemical reaction.

According to the International Classification of Patents (ICP) the sign mark is: A 23K1/175.

### Technical issue

The technical issue solved by this invention includes the following: the way to modify the surface with the chosen amine, in the turbo mixer with knives rotating at 9000 rpm, by employing trybochemical process, chemical and technological processing of zeolitic tuff containing minimum 80% minerals of the clinoptilolite/heulandite group.

Under these conditions, homogenous modification of the entire mineral surface has to be obtained, while its surface charge as well as the degree of hydrophobicity can be controlled and, at the same time, it is possible to obtain an efficient adsorbent of different mycotoxins.

### The background of the invention

Adsorbents are added as the additives to animal feed to prevent toxicity of mycotoxins, i.e. to detoxify the animal feed contaminated with mycotoxins adsorbing mycotoxins in the animal's digestive system in a selective and fast way once they are taken along with the contaminated food.

The adsorbent binds mycotoxins thus decreasing or blocking their toxicity directly in the gastric juice electrolyte.

Some new products for mycotoxins adsorption are available on the world market. They are usually based on modification of clay minerals.

Some of these products are: the HSCA - Novosil and Myco-ad from the USA; Mucofix plus and Biomin from Austria; Mucosil from Mexico.

The surface characteristics are changed by modifying the clay minerals, resulting in improved and expanded efficiency of the adsorption on a wide spectrum of mycotoxins.

The well-known domestic mineral adsorbent of mycotoxins, used as an additive to animal feed, under its commercial name Min-a-zel, is obtained according to the patented: YU no. 48589, manufactured by the "Institute for Technology of Nuclear and Other Mineral Raw Materials", Belgrade, Yugoslavia.

According to this procedure involving chemical and technological processing, the zeolitic tuff containing 85% of mineral clinoptilolite is activated by three-step comminution and, with the addition of sodium chloride, it is further ground to the particle size of max 60 micrometers.

The obtained powdered product is used as a mineral adsorbent of mycotoxins from contaminated animal feed as soon as it gets into the digestive system of an animal.

The mineral adsorbent is added to mycotoxins-contaminated animal feed, in the amount of 0.2% to 0.5%, in the complete feed mix, depending on the degree of contamination.

Mycotoxins mineral adsorbent of improved characteristics is also known as the animal feed additive, obtained according to the patent application YU no. P177/98 (the patent application also filed by the "Institute for Technology of Nuclear and Other Mineral Raw Materials", Belgrade, Yugoslavia).

According to this procedure, by chemical and technological processing, the zeolitic tuff containing 85% of mineral clinoptilolite is activated by three-step comminution to particle size of 150 micrometers and thereafter, with the addition of potassium chloride, depending on the exchangeable potassium content in the raw tuff, it is activated and ground to particle size of maximum 60 micrometers.

The obtained material undergoes wet classification in the spinning unit where particles below 10 micrometers are separated and packed for further use as 25% suspension.

A mineral adsorbent of mycotoxin is obtained in the form of a powdered product when this 25% suspension is filtrated, dried and disintegrated.

As an animal feed additive, it is mixed into the complete feed mix in the amount of 0.3 to 0.5%.

The above mentioned mineral adsorbents proved to be good mycotoxins adsorbents, with molecules of higher polarity (Aflatoxins, etc.) >90%, while mycotoxins of lower polarity (zearalenone, ochratoxin A, T2 toxin, etc.) are 30% - 50% adsorbed.

Mineral adsorbents of mycotoxins, obtained by modification of the mineral surface with the chosen active components, effectively used for prevention of harmful effect of mycotoxins found in the animal feed, are produced by wet process involving higher or lower water content.

Another famous and widely applied adsorbent is the "Organic mineral adsorbent of mycotoxins, as an animal feed additive, procedure for production and application" produced according to the patent application YU no. P-838/00 filed by the "Institute for Technology of Nuclear and Other Mineral Raw Materials", Belgrade, Yugoslavia.

According to the procedure it is obtained by technological processing of ready made zeolitic tuff, with minimum 80% minerals from the clinoptilolite/heulandite group, which is mixed in water suspension to which an organic component from the amines group is added. Thereafter the obtained product is dried and disintegrated.

An ideal contact of the mineral and a modificator is necessary to form organomineral complex, which is achieved by previous dispersing of both reactants in water suspension as well as ready made mineral and organic modificator whereas the reaction occurs in the reactor which provides intensive mixing i.e. ideal contact between the organic molecule and the active centre on the mineral surface (min. 4000 rpm).

A final powdered product is obtained after drying and disintegration, and it is added to the animal feed directly or in the premix, in the amount of 0.2% of the total animal feed mix.

Such a product adsorbs aflatoxins, zearalenone, ochratoxins at the rate exceeding 90%, T-2 toxin at the rate exceeding 80%.

Interaction between zeolite minerals and amines in a solid phase is possible if trybochemical reaction occurs in the device of special performances, allowing amine access to the crystal surface of zeolitic mineral, which is solved with the invention of this new patent application.

Besides that, in spite of careful looking in the patent and science literature the inventors were neither able to find out a procedure for obtaining organomineral complexes, in general, nor the organozeolites obtained by a dry process involving trybochemical reaction in turbo mixer.

### Summary of the invention

Mycotoxins are secondary metabolites of molds and are very toxic for many domestic animals (pigs, cattle, sheep, goats, horses, dogs, cats and rabbits), poultry (chicken, turkeys, ducks and geese), fur-bearing animals, lab animals and fish and for the humans.

Mycotoxicoses are diseases caused by consumption of feed contaminated by mycotoxins, they are not contagious, but there is no medicine or drugs that could treat such diseases. Mycotoxins are readily resorbed in meat, milk and eggs.

Their presence in the animal feed is not only harmful for the animals but for the human health as well.

By trybochemical procedure for obtaining organozeolites, previously prepared zeolites tuff, containing minimum 80% minerals from the clinoptilolite/heulandite group, crashed to the particle size smaller than 150 micrometers, by three-step comminution procedure, according to the known procedure, is treated in a turbo mixer with knives, in certain ratio with the long chain quaternary amine of high molecule mass, with which the modification is carried out.

The reaction occurs in the turbo mixer rotating at 9000 rpm during 2-4 intervals of 60 seconds each, depending on components ratio, type and quantity of the modificator - amine.

The advantage of this invention primarily concerns economic effects since the process of minerals modification is shortened, the drying and disintegration phases, which are applied in the known wet process for obtaining mycotoxins mineral adsorbent, are excluded.

The result of chemical reaction between the exchangeable cations on the surface of the mineral and amine is a newly generated compound - organozeolite.

High intensity mechanical energy released by turbo mixer activates mineral surface creating required conditions for chemical reaction between minerals and amines.

The final product, obtained by trybochemical process, is of the same quality and has the same adsorption characteristics as the products obtained by wet process.

Dry process, according to this invention, is simpler, faster and cheaper than the known wet process although the same product is obtained by any of these two processes.

### Detailed description of the invention

Mineral adsorbent of mycotoxins, with the controlled surface charge and controlled degree of hydrophobicity, is obtained by trybochemical reaction, in a solid phase, treated in dry condition in a turbo mixer with knives, between the mixture of mineral component, previously prepared zeolitic tuff, containing minimum 80% minerals from the clinoptilolite/heulandite group, prepared by the three-step comminution to particle size smaller than 150 µm, according to the patent YU no. 48589 and the chosen organic component of the long chain quaternary amine (high molecule mass).
I Mineral component, zeolitic tuff used for obtaining organic zeolite has the following characteristics:
1) Clinoptilolite/heulandite content - 80%
2) Chemical composition:

| | |
|---|---|
| SiO₂ | 63 - 68 mass % |
| Al₂O₃ | 11 - 14 mass % |
| Fe₂O₃ | 0.8 - 2.5 mass % |
| MnO | 0.01 - 0.03 mass % |
| CaO | 2.5 - 4.5 mass % |
| MgO | 0.8 - 1.5 mass % |
| Na₂O | 0.8 - 1.5 mass % |
| K₂O | 1.0 - 2.0 mass % |
| Loss by ignition | 10.5 - 14.5 mass % |

3) Content of heavy metals (Pb, Sb, Cd, Cr) max 40 ppm
4) Particle size distribution 100% smaller than 150 micrometers
5) Cation exchange capacity of 1,60 ± 0,10 meq/g
6) Chemical stability according to dissolved Al
- At pH 3 max 5 ppm of dissolved Al
- At pH 2,5 max 100 ppm of dissolved Al

7) Accessory minerals
- Any traces of erionite, asbestos, sepiolite and other fibrous minerals are not permitted.

II Organic component is prepared by crashing to the particle size smaller than 1 mm.
Organic component is a long chain quaternary amine (high molecule mass), such as octadecylbenzyldimethyl ammonium or similar quaternary ammonium cations.
Organic component is added in a solid phase in the amount of 0.01-0.10 meq/g of prepared mineral component, zeolitic tuff, which contains at least 80% of clinoptilolite/heulandite minerals.
The type of amines as well as their amount depend on the type and quantity of mycotoxins to be adsorbed.
Mixtures of mineral and organic components of a certain ratio are transferred into the turbo mixer with knives. The reaction takes place by high speed mixing of the components in the turbo mixer at 9000 rpm.
The turbo mixer with the mixture of components is turned on at 7000 rpm for 30 sec and for other 30 sec it operates at 9000 rpm.
This procedure is repeated 2-4 times depending on the ratio of components and the type and quantity of amines respectively, provided that the mixing is suspended at the end of each round i.e. there is a 5 minutes break between each round.
These conditions ensure good contact between quaternary ammonium cations and exchangeable cation zeolite resulting in chemical reaction between the mineral and amine i.e. creation of organozeolite.
Under these conditions the reaction between exchangeable cations, which are on the surface of minerals, zeolitic tuff (Na⁺, K⁺, Ca²⁺, Mg²⁺) and amine takes place resulting in creation of a new compound - organozeolite.
Mechanical energy of high intensity, which is produced in turbo mixer, provides proper environment for chemical reaction between minerals and amines.
The final product, obtained by trybochemical process, is of the identical adsorption characteristics as the product obtained by the known wet procedure, according to the announced patent YU no. P-838/00. Those who invented the above mentioned product are, *inter alia,* the applicants and inventors of the "trybochemical procedure of obtaining organic zeolite" contained in the new patent application. However, the dry procedure is simpler, faster and therefore cheaper than the known wet procedure.
There is no difference in the chemical and physico-chemical properties between the products - adsorbents of mycotoxins - obtained by the wet procedure and the new trybochemical procedure, because they adsorb mycotoxins of different characteristics in an identical way without desorption; they are inert to vitamins, amino acids, micro and macro elements; they are not resorptive in an organism; they are of controlled surface charge and controlled degree of hydrophobicity, while they contain balanced ratio of exchangeable cations (amines and inorganic cations).
Organozeolite, highly efficient adsorbent of mycotoxins, is obtained by the procedure shown below.

### Example

In order to carry out the procedure according to this invention, 100 g of mineral component, natural zeolitic tuff, which contains minimum 80% minerals of the clinoptilolite/heulandite group, previously comminuted to the particle size up to 150 micrometers at the most in the turbo mixer with knives running at 9000 rpm.

Thereafter, 2-10 meq octadecylbenzyldimethyl ammonium chloride is added into the mixer.

The turbo mixer is turned on to run for 30 sec at 7000 rpm followed by the increased speed at 9000 rpm for other 30 sec. Once the turbo mixer is stopped for 5 minutes, the activation process has to be repeated other 2 to 4 times until the reaction has been completed.

The final product, which is obtained after the activation in turbo mixer, is organozeolite that is hydrophobic and as such it is mixed into the animal feed or premixes as well as into other mixtures.

The amount of 0.2% organozeolite is added to the complete animal feed.

The obtained mineral adsorbent, organozeolite, is adsorbed without desorption of the following mycotoxins:
- Aflatoxin B₁ 100%
- Zearalenone 96%
- Ochratoxin A 97%
- T₂ toxin 81%
- DAS 50%
- Ergosine 97%
- Ergotamine 99%
- Ergocornine 94%
- Ergocriptine 97%
- Ergocristine 99%

This adsorbent neither adsorbs vitamins (A, B₆, D, E) and amino acids, nor the essential macro and microelements.

The adsorbent is used in powder form and it is necessary to add 0.2 % of the adsorbent in the complete animal feed mix, which is enough to prevent poisoning of animals by mycotoxins if they are found in the feed consumed by animals.

This mineral adsorbent is not resorbed in the organism, and if it is regularly taken in the quantity of 0.2% there could be no harmful effects whatsoever.

It is of crucial importance for the effect of mycotoxins adsorption to this adsorbent that mycotoxins adsorption rate to the adsorbent is higher than the rate of adsorption of mycotoxins in an animal body.

This is very important, especially when we know that, for example, the zearalenon is 99% resorbed for less than 60 minutes whereas for the resorption of 50% zearalenon found in rats it takes less than 5 minutes.

Since this organomineral adsorbent, added in the quantity of 0.2% has no harmful effects, it is recommended to add this adsorbent to the animal feed continuously as it is never known whether the feed contains mycotoxins or not. If the feed is contaminated by mycotoxins and does not contain adsorbent of mycotoxins it will result in animal poisoning.

Subsequent addition of the adsorbent has no influence on the resorbed mycotoxins; it can only prevent further poisoning.

To ensure prevention of poisoning by mycotoxins, the adsorbent of mycotoxins has to be available in animal feed at all times i.e. whenever the feed reaches the digestive system, the adsorption of mycotoxins to the adsorbent takes place ensuring that they will not be resorbed.

## Claims

1. Trybochemical process for production of organozeolite adsorbent of mycotoxins in dry conditions, comprising modification of the zeolite tuff surface, containing at least 80% minerals from the clinoptilolite/heulandite group, with long chain quaternary amine, in turbo mixer with knives at 9000 rpm.

2. Trybochemical process for production of organozeolite adsorbent of mycotoxins in dry conditions according to Claim 1), **characterized in that** zeolite tuff is previously ground to the particle size smaller than 150 µm.

3. Trybochemical process for production of organozeolite adsorbent of mycotoxins in dry conditions according to Claim 1), **characterized in that** amine is previously ground to the particle size smaller than 1 mm.

4. Trybochemical process for production of organozeolite adsorbent of mycotoxins in dry conditions according to Claim 1), **characterized in that** amine is octadecylbenzyldimethyl.

5. Trybochemical process for production of organozeolite adsorbent of mycotoxins in dry conditions according to Claim 1), **characterized in that** amine is added in the quantity ranging from 0,01 to 0,1 meq/g of zeolite tuff.

## Patentansprüche

1. Tribochemischer Vorgang zur Herstellung eines Organozeolitadsorbens aus Mykotoxin in trockenen Bedingungen, eine Modifikation der Zeolittuffoberfläche umfassend, der mindestens 80% der Mineralien aus der Klinoptilolith/Heulanditgruppe aufweist, mit einem langkettigem quartären Amin, in einem Turbomischer mit Schneiden bei 9000 rpm.

2. Tribochemischer Vorgang zur Herstellung eines Organozeolithadsorbens aus Mykotoxin in trockenen Bedingungen nach Anspruch 1, **dadurch gekennzeichnet, dass** der Zeolittuff vorher auf eine Teilchengröße kleiner als 150 µm zermalmt wurde.

3. Tribochemischer Vorgang zur Herstellung eines Organozeolitadsorbens aus Mykotoxin in trockenen Bedingungen nach Anspruch 1, **dadurch gekennzeichnet, dass** der Amin vorher auf eine Teilchengröße kleiner als 1 mm zermalmt wurde.

4. Tribochemischer Vorgang zur Herstellung eines Organozeolitadsorbens aus Mykotoxin in trockenen Bedingungen nach Anspruch 1, **dadurch gekennzeichnet, dass** der Amin Octadecylbenzyldimethyl ist.

5. Tribochemischer Vorgang zur Herstellung eines Organozeolitadsorbens aus Mykotoxin in trockenen Bedingungen nach Anspruch 1, **dadurch gekennzeichnet, dass** der Amin in der Menge zwischen 0.001 bis 0.1 meq/g von Zeolittuff zugegeben wurde.

## Revendications

1. Le procédé tribochimique de production à sec d'un organozéolite constituant un adsorbant des mycotoxines. L'invention concerne aussi la modification de la surface de tuf zéolite contenant au moins 80% de minéraux du groupe clinoptilolite/heulandite à l'aide d'une amine quaternaire à longue chaîne, dans un mélangeur à turbine avec couteaux à une vitesse de 9000 tr/min.

2. Le procédé tribochimique de production à sec d'un organozéolite constituant un adsorbant des mycotoxines selon la Revendication 1, **caractérisé en ce que** le tuf zéolithe est précédemment concassé en particules dont la taille est inférieure à 150 µm.

3. Le procédé tribochimique de production à sec d'un organozéolithe constituant un adsorbant des mycotoxines selon la Revendication 1, **caractérisé en ce que** l'amine est précédemment concassée en particules dont la taille est inférieure à 1mm.

4. Le procédé tribochimique de production à sec d'un organozéolite constituant un adsorbant des mycotoxines selon la Revendication 1, **caractérisé en ce que** l'amine est octaldecylbenzylediméthyl.

5. Le procédé tribochimique de production à sec d'un organozéolite constituant un adsorbant des mycotoxines selon la Revendication 1, **caractérisé en ce que** la quantité de l'amine ajoutée peut varier de 0,01 à 0,1 meq/g de tuf zéolite.
